(19) Europäisches Patentamt
European Patent Office
Office européen des brevets

(11) Publication number: **0 051 966**
**A2**

(12) **EUROPEAN PATENT APPLICATION**

(21) Application number: **81305183.6**

(22) Date of filing: **30.10.81**

(51) Int. Cl.³: **C 08 G 59/68**, C 08 L 63/00, C 08 G 77/18, C 07 F 5/06, B 01 J 21/02

(30) Priority: **10.11.80 US 205228**

(43) Date of publication of application: **19.05.82**
**Bulletin 82/20**

(84) Designated Contracting States: **BE DE FR GB IT SE**

(71) Applicant: **DOW CORNING CORPORATION, 3901 S. Saginaw Road, Midland Michigan 48640 (US)**

(72) Inventor: **Lutz, Michael Andrew, 1815 Wyllys Midland, Michigan 48640 (US)**

(74) Representative: **Laredo, Jack Joseph et al, Elkington and Fife High Holborn House 52/54 High Holborn, London, WC1V 6SH (GB)**

(54) **Aluminum catalyzed silicon alkoxide-epoxy compositions.**

(57) Epoxy resins are cured with alkoxy containing silicon compounds by heating with certain aluminum catalysts. A specific example is the reaction of epoxy resins derived from bisphenol A with phenyltrimethoxysilane in the presence of aluminum trisacetylacetonate.

EP 0 051 966 A2

# ALUMINUM CATALYZED SILICON ALKOXIDE-EPOXY COMPOSITIONS

## BACKGROUND OF THE INVENTION

It is known from U.S. Patent 3,971,747 issued July 27, 1976 to Dow Corning Corporation that silanol-containing organosilicon compounds can be reacted with epoxy resins in the presence of various aluminum catalysts including those employed in the instant invention. However, in this patent there is no teaching of the reaction of an alkoxy silane with an epoxy resin.

U.S. Patents 3,150,116 issued September 22, 1964 to Devoe & Raynolds Co., Inc. and 3,154,597 issued October 27, 1964 to Devoe & Raynolds Co. Inc. teach reacting epoxy resins containing at least one hydroxyl group with alkoxy-containing silanes and siloxanes. The products are cured with conventional epoxy curing agents such as amines, acids, anhydrides and urea or phenol aldehyde resins. There is no teaching in this patent of the use of an aluminum catalyst or of the use of epoxy resins which do not contain hydroxy groups.

U.S. Patent 3,758,423 issued September 11, 1973 to Owens-Illinois Inc. teaches reacting epoxy monomers with chlorosilanes. In column 2, it also states alkoxy silanes such as phenyltrimethoxysilane

can be used. However, the only catalysts shown are amines (column 3).

U.S. Patent 3,287,160 issued November 22, 1966 to Union Carbide Corporation shows curing epoxy resins by reacting them with a special type of silicate; namely, silicates having the formula: $Si\{(OCH_2)_nOR\}_4$. The catalysts mentioned in column 4, are various metal salts of carboxylic acids, but aluminum is not in the list of metals.

This invention represents an advance in the art of organosilane-epoxy reaction products, particularly with respect to coating applications, in that the epoxy resin can now be cured rapidly at relatively low temperatures by using reactive diluents as crosslinkers such as monomeric alkoxy silanes. The aluminum catalysts are relatively non-toxic and can be employed in small amounts.

Since most alkoxy silanes are fluid, one can use them in connection with fluid epoxy resins to formulate sprayable coating formulations without using solvents which cause environmental problems or aqueous emulsions which require excess energy to remove the water. It should be understood, however, that the invention is not limited to fluid compositions but the epoxy resins and/or the silicon compound can be solid. In this case, a mutual solvent may be employed to make the compositions coatable.

## SUMMARY OF THE INVENTION

This invention relates to a curable composition consisting essentially of (1) a compound containing at least one 1,2-epoxy group; (2) a compound containing at least one SiOR group in which R is an alkyl radical of 1 to 4 carbon atoms or an -R'OR" radical of 1 to 4 carbon atoms in which R' is an alkylene radical and R" is an alkyl radical, both R' and R" containing from 1 to 2 carbon atoms, when (2) contains one SiOR group, (1) must containing two 1,2-epoxy groups; and (3) an aluminum catalyst compatible with (1) and combinations of (1) and (2), of the group: aluminum compounds containing the AlOC bond, aluminum silanolates and aluminum siloxanolates.

This invention also relates to a method of curing the combination of (1) and (2) by mixing (1), (2) and (3) and allowing the mixture to cure.

## DETAILED DESCRIPTION

The epoxy compounds employed as (1) can be any compound of the formula $A(\overbrace{CHCH}^{O}{}_y)_n$ where n is an integer of at least 1; y is 1 or 2; A is a monovalent, divalent or polyvalent organic radical which can be monomeric or polymeric in nature. For example (1) can be simple compounds containing one epoxy group such as phenyl glycidyl ether, butyl glycidyl ether, decyl glycidyl ether, cyclohexane monoepoxide or cresyl

glycidyl ether; or compounds containing two epoxy groups such as vinyl cyclohexene dioxide, bis(3,4-epoxy-6-methylcyclohexylmethyl)adipate, 3,4-epoxycyclohexylmethyl-3,4-epoxycyclohexane carboxylate, resorcinol diglycidyl ether, neopentyl glycol diglycidyl ether, 1,4-butanediol diglycidyl ether, epoxy cyclohexylspiroepoxycyclohexane dioxide, the glycidyl ether of bisphenol A and the diepoxy compounds disclosed in U.S. Patent 4,038,338 which is hereby incorporated by reference; epoxies having three or more epoxy groups such as glycerol triglycidyl ether and pentaerythritol tetraglycidyl ether.

In the above examples, (A) does not contain a repeating unit but this invention also includes epoxy resins having polymeric structures such as Novolac epoxy resins, which are polyglycidyl ethers of phenol formaldehyde resins, polyglycidyl ethers of orthocresol formaldehyde resins, the diglycidyl ether of polypropylene oxide having nine propylene oxide units per molecule, diglycidyl ether of polymers of epichlorohydrin and bisphenol A, epoxy functional polyethyl acrylate, epoxy functional polydienes, epoxy functional polyesters, epoxy functional polyamides, epoxy functional polycarbonates and polysiloxanes, polysilanes and polysilcarbanes having epoxy groups attached to the silicon atoms through SiC bonds such as

those disclosed in U.S. Patent 3,455,877 issued July 15, 1969 to Dow Corning Corporation.

Any of the above epoxy compounds can be halogenated such as, for example, reaction products of epichlorohydrin and tetrabromobisphenol A and epoxy resins containing chlorine.

The organosilicon compound (2) can be any compound containing at least one SiOR group. This includes compounds containing one or more silicon atoms each of which has one or more OR groups attached thereto and compounds containing one silicon atom which has one or more OR groups attached thereto. The silicon compound can be monomeric such as a compound of the formula $R'''_nSi(OR)_{4-n}$ wherein n is 0 to 3, where R is as above defined and R''' is attached to the silicon through a silicon-carbon bond and can be any hydrocarbon radical such as phenyl, methyl, vinyl, ethyl, octadecyl or cyclohexyl; any halohydrocarbon radical such as 3,3,3-trifluoropropyl, chlorophenyl, 3-chloropropyl and radicals containing ether and ester linkages such as $CH_3OCH_2CH_2CH_2$- and $CH_3OOCCH_2CH_2$-.

The silicon-containing compounds can be polymeric such as siloxanes containing SiOR groups, e.g.:methoxylated phenyl polysiloxanes, ethoxylated dimethylsiloxanes, and methoxylated copolymers of monophenylsiloxane and dimethylsiloxane (In the siloxanes, only one silicon atom need have OR groups

attached thereto ); polysilanes and polysilcarbanes containing OR groups in which the other silicon substituents can be any R''' group.

In addition, (2) may contain any polymeric organic material which contains silyl groups attached thereto of the formula $-SiR'''_n(OR)_{3-n}$ in which n is 0 to 2 and R''' and R are as above defined. For example, (2) may be silylated acrylates, silylated polyolefins, silylated poly(chloroolefins), silylated polydienes, silylated polystyrene, silylated polyesters, silylated polyamides, silylated polycarbonates, silylated polyethers or silylated polysulfides. Examples of SiOR and SiOR'OR" groups operative herein are methoxy, ethoxy, isopropyl, $-OCH_2OCH_2CH_3$, $-OCH_2CH_2OCH_3$ and $OCH_2CH_2OCH_2CH_3$.

The catalyst (3) used herein must be compatible with (1) and combinations of (1) and (2). Compatibility can be determined by heating in an open dish a mixture of (1), (2), and (3) with stirring until a homogeneous mixture is obtained. If (1) and (2) are solids, a mutual solvent may be used. When (1) and/or (2) are polymeric, it is best to add (3), coat the mixture on a substrate and check clarity of the film after removal of the solvent. The coating can then be heated at 100° to 160°C and the film tested for durability to solvents, by the rub test described

below. Thus, it is a simple matter to determine the compatibility of the catalyst with the resins.

Types of aluminum catalysts which are operative herein are any compatible compound containing the AlOC bond such as aluminum alkoxides, e.g. aluminum triisopropoxide, aluminum trisecondary butoxide, aluminum tri(betamethoxy ethoxide), aluminum trichlorohexoxide, aluminum tridecoxide, aluminum triheptoxide, aluminum trineodecoxide; aluminum chelates of betadicarbonyl compounds of beta-hydroxy carbonyl compounds (These are Al derivatives of beta-diketones, beta-ketoesters or beta-diesters and beta-hydroxyl carbonyl compounds such as beta-hydroxy ketones such as acetone alcohol or beta-hydroxy esters such as phenylsalicylate ), e.g. aluminum triacetylacetonate chelates, aluminum triacetoacetic ester chelate, aluminum tridiethyl malonate chelate and aluminum acylates such as aluminum stearate, aluminum oleate, aluminum octoate and aluminum palmitate. The aluminum compound may contain a mixture of two or more different groups such as aluminum diisopropoxy acetoacetic ester chelate, aluminum diisopropoxy stearate, aluminum disecondary butoxyacetoacetic ester chelate, diisopropoxy phenylsalicylate chelate and aluminum isopropoxymethoxyacetoacetic ester chelate. The alkoxides, acylates or chelates can be halogenated

with fluorine, bromine or chlorine, for example, aluminum tris(hexafluoroacetylacetonate).

In addition, (3) can also be any compatible aluminum silanolates or siloxanolates which have the grouping SiOAl= in which the silicon is substituted with on the average one to three R''' groups defined above. In the silanolate or siloxanolate, the remaining valences of the Al can be satisfied with other SiOAl linkages or with AlOC groups such as the alkoxy, acyloxy or chelate groups shown above. In the siloxanolates, at least two Si atoms are connected through an SiOSi bond. The silanolates have the structure, for example; $(R'''_3SiO)_3Al$, and examples of siloxanolates are

$$=AlO(\overset{R'''_2}{\overset{|}{Si}}O)_3Al= \text{ and } (R'''_3SiO)_2AlO(\overset{R'''_2}{\overset{|}{Si}}O)_3Al(OSiR'''_3)_2.$$

The compositions of this invention can be prepared by mixing (1), (2), and (3) in any desired manner. If desired, a mutual solvent such as toluene, methylisobutylketone or butanol-toluene mixtures can be used. The storage life of the catalyzed composition varies with the particular combination of (1), (2), and (3) and with the temperature. For example, the higher the catalyst concentration, the shorter the storage life. Also, some catalysts are more active than

others. Certain combinations cure within one to three days at room temperature but best cures of all compositions are obtained by heating in the range of 100 to 200°C.

The proportions of (1), (2) and (3) are not critical insofar as operativeness is concerned. The optimum proportions vary with the end use in mind. The preferred range is from 1 to 30 percent by weight of (2) based on the combined weights of (1) and (2). Another way of expressing the proportions is by way of the epoxy (that is, 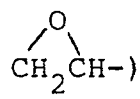) to SiOR ratio. Preferably, this is in the range of 50:1 to 1:1. It should be understood that either (1) or (2) can be used to cure the other. Thus, 1 percent by weight or less of (2) can be used to cure (1) or 1 percent by weight or less of (1) can be used to cure (2). If, however, one wishes to substantially modify the properties of the cured product, one should employ 20 percent by weight or more of (2) to modify (1) or vice versa.

The amount of catalyst used can vary widely depending upon the activity and the rate of cure desired. In general, the catalyst is employed in an amount of from 0.01 to 1 percent by weight based on the weights of (1) or (2) but higher or lower amounts can be used if desired.

It has been found that lower aliphatic alcohols of 1 to 4 carbon atoms accelerate the cure of the materials when employed in amounts of from 0.1 to 1 percent by weight based on the weight of (1) and (2). This may be due to the formation of complexes of the formula $H^{+}Al^{-}(OR)_4$.

The rate of cure of the catalyzed compositions can be reduced substantially by incorporating amines such as triethylamine and the like. This procedure can improve the storage life of the catalyzed compositions. Upon heating, however, the mixtures will cure and for that reason it is preferred to use relatively volatile amines which will evaporate during heating.

The compositions of this invention are useful as coating compositions on substrates such as metals, organic plastics, glass, ceramic and wood. If desired, the compositions may contain fillers such as silica, clay, glass fibers or metal oxides and pigments to give the desired color.

The solvent resistence of the cured films shown in the examples was determined by the following test. The materials used were cheesecloth, purity grade 20, a ball peen hammer having a head weight of 454 g and a total length of 31.5 cm., and an aluminum panel 22.9 cm by 7.6 cm by 0.06 cm. The solvents used are those specified in the examples below.

The procedure used was to apply the material to the aluminum panel and cure as shown in the examples. The film thickness was then determined and noted. Four layers of the cheesecloth were tightly rapped around the ball end of the hammer and secured tightly with a copper wire. The specified solvent was applied to the cheesecloth at the tip of the ball until the cloth was saturated but not dripping. The ball was immediately placed on the film, the hammer grasped 25 cm from the ball and the ball and cloth moved back and forth for a distance of 5 to 10 cm in a straight line without any additional pressure other than the weight of the hammer. One stroke back and forth was counted as a single cycle. The rubbing speed was between 80 and 120 cycles per minute and the strokes were continued until the first sign of bar substrate was visible. If the number of cycles exceeded 200, the test was discontinued and the results simply reported as greater than 200.

The hardness of the cured films was determined in accordance with ASTM-D-3363-74.

The epoxy resin used in Example 1 has the structure;

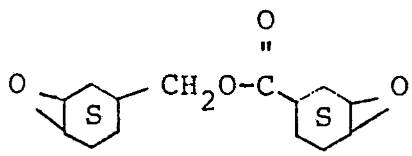

The following examples are illustrative only and do not limit the invention which is properly delineated in the appended claims. It will be apparent to those having ordinary skill in silicone technology that, in addition to the specific examples of epoxy resins, organosilicon compounds, and aluminum catalyst shown in the examples, any epoxy resin, any organosilicon compound and any aluminum catalyst within the scope of the claims would also operate.

Example 1

The epoxy resin 3,4-epoxycyclohexylmethyl-3,4-epoxycyclohexane carboxylate was mixed with 0.5 percent by weight of phenyltrimethoxysilane based on the weight of the epoxy resin and the silane and 0.1% by weight Al tris(acetylacetonate). The mixture was coated on Al to give a 0.1 mil (.0025 mm) film and cured 2 minutes at 200°C. The resulting film had a pencil hardness of 2H and resistance to methylisobutylketone solvent greater than 200 cycles by the above solvent test.

Example 2

Phenyltrimethoxysilane was mixed with the diglycidyl ether of bisphenol A (epoxy equivalent

weight 172-176) in amount of 10 percent by weight based on the weight of silane and epoxy resin (The mixture had a viscosity of 946 cs. at 25°C.). To the mixture was added 0.2% by weight of Al tris(acetylacetonate). The composition was coated on aluminum and cured 10 minutes at 200°C. The cured film had a pencil hardness of F.

Example 3

A mixture of 80% by weight of the reaction product of epichlorohydrin and bisphenol A having an epoxy equivalent weight of 475 to 575 and 20% by weight of phenylglycidyl ether was prepared and to this was added 40% by weight phenyltrimethoxysilane and 0.2% Al tris(acetyl acetonate). The mixture was coated on Al and cured 10 minutes at 200°C to give a 0.1 mil film. The resulting film had a pencil hardness of 2H and a solvent resistance to methylisobutyl ketone greater than 200 cycles.

Example 4

This example shows variations in the aluminum catalyst.

In each case, the epoxy resin of Example 1 was mixed with phenyltrimethoxysilane in amount to give an epoxy to $-OCH_3$ ratio of 3.5:1 and with 1% by weight of the catalyst shown in Table I and the gel time was determined by heating in Al weighing dishes on a hot plate heated at 160°C.

Example 5

This example shows variations in the organosilicon compounds.

In each case shown in Table II, the organosilicon compound was mixed with the epoxy resin of Example 1 in amount of 3.5 epoxy groups per alkoxy group and with 0.1% by weight of the catalyst Al isopropoxy methoxy (ethyl acetoacetonate chelate), and the gel time was determined by heating on a hot plate operating at 160°C.

Example 6

This example shows the use of various epoxy resins.

Two organosilicon compounds were used:

A is $\{C_6H_5Si(OCH_3)_2\}_2O$ and

B is a partial hydrolyzate of phenyltrimethoxy silane having a methoxy equivalent weight of 197 g.

In each case, the organosilicon compound was mixed with the epoxy resin in amount of 2 epoxy groups per methoxy and with 0.2% by weight of the Al catalyst of Example 5, and heated on a hot plate operating at 160°C. The various compositions are tabulated in Table III.

Example 7

This example shows the use of various epoxy to SiOR ratios.

The epoxy resin of Example 1 was mixed with the silanes shown below and with the aluminum catalyst of Example 5 in the amounts shown in Table IV and heated on a hot plate operating at 160°C. The cure times are shown in Table IV.

Example 8

This example shows the shelf life of a catalyzed formulation at room temperature and how this can be stabilized by an amine and effect of an alcohol to speed up the reaction.

In each case, 8 g of the epoxy resin of Example 1 were mixed with 1.77 g phenyltrimethoxysilane, 0.146% by weight of the catalyst of Example 5 and the additive shown in Table V. The gel time at room temperature was determined.

Example 9

This example shows reacting silylated acrylate resins with an epoxy resin.

2.83 ml of toluene and 95.4 ml of butanol were added to a flask and brought to reflux. A mixture of 76 g of ethyl acrylate and 9.9 g of methacryloxypropyltrimethoxysilane was added in 8 ml increments at 10 minute intervals while at the same time 8 ml of a 10 weight percent solution of benzoyl

peroxide in toluene was added separately in 10 equal increments with the acrylate mixture. Thus, with each addition, 8 ml of the monomer mixture and .8 ml of the peroxide solution were added separately but simultaneously to the flask. After addition was complete, the contents were refluxed for an additional four hours. The resulting copolymer contained 95 mol percent ethyl acrylate and 5 mol percent trimethoxysilylpropylmethacrylate units. It is referred to below as polymer A.

Polymer B was prepared as above using the following proportions: 2.4 ml toluene, 92.1 ml butanol, 39 g ethylacrylate, 39 g methylmethacrylate and 4.95 g of methacryloxypropyltrimethoxysilane. The resulting copolymer contained 48.75 mol percent ethylacrylate, 48.75 mol percent methylmethacrylate and 2.5 mol percent trimethoxysilylpropylmethacrylate units.

To each of the solutions of A and B was added the epoxy resin of Example 1 in amount of 5 epoxy groups per $SiOCH_3$ group. Each solution was catalyzed with Al tris(acetylacetonate) in the amount shown in Table VI coated in Al panels to give 8 mil (0.2 mm) wet films and cured on a forced air oven for 15 minutes at 160°C. The solvent resistance of the cured films is shown in Table VI.

Example 10

This example shows curing on epoxidized acrylate with a silane.

Using the procedure of Example 9, the following materials were used: 91 cc of toluene, 68 g of methylmethacrylate and 17 g of glycidyl methacrylate. The resulting copolymer was 85 mol percent methylmethacrylate and 15 mol percent glycidylmethacrylate units. This copolymer was mixed with phenyltrimethoxysilane in amount to give an epoxy group to $SiOCH_3$ ratio of 5 to 1 and with 0.01% of the catalyst of Example 5. The material was coated on Al panels to give 8 mil wet films and cured 5 minutes at 160°C. The solvent resistance of the resulting films to the following solvents was found to be, for toluene >200, for methyl ethyl ketone 130 and for ispropanol >200.

TABLE I

| Catalyst | Gel Time |
|---|---|
| Al diisopropoxide phenyl salicylate chelate | 90 sec. |
| Al tris(phenyldimethylsilanolate) | 2 min. |
| Al benzoate | 160 sec. |
| Al tris(hexafluoroacetylacetonate) | 45 sec. |
| Al oleate | 2 to 7.5 min. |
| Al stearate | 2 to 3 min. |
| Al resinate | 60 sec. |
| Al triisopropoxide* | 60 sec. |

*Temperature 150°C.

TABLE II

| Organosilicon Compound | Gel Time |
|---|---|
| diphenyl methylethoxy silane | 40 sec. |
| dimethyl dimethoxy silane | 3 to 4.5 min. |
| phenyl methyl dimethoxy silane | 50 sec. |
| diphenyl dimethoxy silane | 30 sec. |
| methyl trimethoxy silane | 120 sec. |
| methyl triethoxy silane | 110 sec. |
| propyl trimethoxy silane | 50 sec. |
| 3,3,3-trifluoropropyl trimethoxy silane | 45 sec. |
| methacryloxypropyl trimethoxy silane | 75 sec. |
| tetraethoxy silane | 75 sec. |
| $\{C_6H_5Si(OCH_3)_2\}_2O$ | 40 sec. |
| methoxylated copolymer of 33 mol % $C_6H_5SiO_{3/2}$ and 67 mol % $(CH_3)_2SiO$ containing 17 weight % methoxy groups | 50 sec. |

TABLE III

| Organosilicon Compound | Epoxy Resin | Gel Time |
|---|---|---|
| A | diglycidyl ether of 1,4-butane diol | 60 sec. |
| B | aliphatic triglycidyl ether epoxy equivalent weight of 150-170 | 70 sec. |
| B | polyglycidyl ether of a phenol formaldehyde resin having an epoxy equivalent weight of 172 to 179 | 70 to 90 sec. |
| A | polyglycidyl ether of ortho-cresol-formaldehyde having an epoxy equivalent weight of 235 | 180 sec. |

TABLE III (Continued)

| Organosilicon Compound | Epoxy Resin | Gel Time |
|---|---|---|
| A | diglycidyl ether of propylene glycol having an epoxy equivalent weight of 305 to 335 | 2-4.5 min. |
| B | epichlorohydrin-brominated bisphenol A resin containing 20 wt. % Br and having an epoxy equivalent weight of 223 to 246 | 75-90 sec. |
| B | diglycidyl ether of bisphenol A | 55-70 sec. |

TABLE IV

| Silane | Ratio Epoxy/SiOR | % by wt. Catalyst | Gel Time |
|---|---|---|---|
| Phenyltrimethoxy silane | 50:1 | 0.02 | 90 sec. |
| | 25:1 | 0.02 | 70 sec. |
| | 5:1 | 0.022 | 45 sec. |
| | 1:1 | 0.029 | 70 sec. |
| Phenyltriethoxy silane | 50:1 | 0.02 | >10 min. |
| | 25:1 | 0.02 | 120 sec. |
| | 5:1 | 0.022 | 90 sec. |
| | 1:1 | 0.031 | 120 sec. |

TABLE V

| Additive | Amount % by Weight | Gel Time |
|---|---|---|
| None | -- | 1 day |
| Triethylamine | 0.1 | >7 days |
| | 1.0 | >7 days |
| Methanol | 0.1 | 13 min. |
| | 1.0 | 120 min. |
| Methanol and Triethylamine | 0.1<br>0.1 | >7 days |
| Methanol and Triethylamine | 1.0<br>0.1 | >7 days |

TABLE V (Continued)

| Additive | Amount % by Weight | Gel Time |
|---|---|---|
| Butanol | 0.1 | 150 min. |
| | 1.0 | 25 min. |
| Butanol and | 1.0 | >7 days |
| Triethylamine | 0.1 | |

TABLE VI

| Amount of Catalyst In Weight % | Polymer | Solvent Resistance Toluene | Methylethyl Ketone | Isopropanol |
|---|---|---|---|---|
| 0.7 | A | > 200 | > 200 | > 200 |
| 0.5 | B | > 200 | > 150 | > 200 |

Claims:

1. A curable composition characterized in that it comprises

(1) a compound containing at least one 1,2-epoxy group,

(2) a compound containing at least one SiOR group in which R is an alkyl radical of 1 to 4 carbon atoms or an -R'OR" radical of 1 to 4 carbon atoms in which R' is an alkylene radical and R" is an alkyl radical, both R' and R" containing from 1 to 2 carbon atoms, when (2) contains one SiOR group, (1) containing two 1,2-epoxy groups, and

(3) an aluminum catalyst compatible with (1) and combinations of (1) and (2), of the group: aluminum compounds containing AlOC bonds, aluminum silanolates and aluminum siloxanolates.

2. The method of curing the composition of claim 1 which comprises mixing (1), (2) and (3) and allowing the mixture to cure.

3. The method of claim 2 in which the curing is carried out at temperatures of from 100 to 200°C.

4. A composition of claim 1 in which (3) is selected from the group: Al alkoxides, Al acylates and Al chelates of beta-dicarbonyl compounds.

5. The composition of claim 1 in which (3) is Al tris(acetylacetonate).

6. The composition of claim 1 in which (3) is Al(isopropoxy)(methoxy)acetoacetic ester chelate.

7. The method of claim 2 or 3 in which (3) is selected from the group consisting of Al alkoxides, Al acylates and Al chelates of beta-dicarbonyl compounds.

8. The method of claim 2 or 3 in which (3) is Al tris(acetylacetonate).

9. The method of claim 2 or 3 in which (3) is Al(isopropoxy)(methoxy)acetoacetic ester chelate.